# EUROPEAN PATENT APPLICATION

(11) **EP 4 525 219 A1**
(43) Date of publication of application: **19.03.2025**
(21) Application number: 23802869.0
(22) Date of filing: 09.05.2023
(51) Int. Cl.: H01R 13/652, B60L 53/16

(54) **QUICK-CHANGE CONNECTOR AND VEHICLE HAVING SAME**

(30) Priority: 09.05.2022 CN 202221095652 U
(71) Applicant: Nio Battery Technology (Anhui) Co., Ltd., Hefei, Anhui 230601 (CN)
(72) Inventor: CAO, Yu, Shanghai 201804 (CN)
(74) Representative: Vossius & Partner Patentanwälte Rechtsanwälte mbB
(86) International application number: PCT/CN2023/092860
(87) International publication number: WO 2023/217099

(57) **Abstract**

The disclosure relates to the field of vehicles, and particularly provides a quick-swapping connector and a vehicle having same, which aim to solve the problems of the large size and heavy weight of an existing quick-swapping connector having an equipotential connection function. For this purpose, the quick-swapping connector of the disclosure comprises a socket and a plug, wherein a grounding positioning pin is provided on the socket, a first annular grounding structure is sleeved on the periphery of the grounding positioning pin, a grounding positioning hole is provided in the plug, a second grounding structure is connected in the grounding positioning hole, the grounding positioning pin is insertable into the grounding positioning hole for positioning, and after the grounding positioning pin is inserted into the grounding positioning hole, the first grounding structure comes into contact with the second grounding structure. With such an arrangement, it is possible to save on interface space, ensure reliable contact between the plug and the socket, avoid mechanical collision between the grounding structures during battery swapping, miniaturize the quick-swapping connector, and reduce the weight and costs thereof while realizing an equipotential connection between the socket and the plug.

## Description

The disclosure claims the priority to Chinese Patent Application No. CN 202221095652.4, filed on May 09, 2022, which is incorporated herein by reference in its entirety.

### TECHNICAL FIELD

The disclosure relates to the technical field of vehicles, and particularly provides a quick-swapping connector and a vehicle having same.

### BACKGROUND ART

Currently, a battery swapping mode for electric vehicles has numerous advantages and has developed into an important energy supply mode for the electric vehicles. In the battery swapping mode, a battery is connected to a vehicle body by means of a quick-swapping connector, a socket end of the connector is mounted on the battery, and a plug end of the connector is mounted on the vehicle body, and quick battery swapping is realized by disconnecting the physical contact between the socket end and the plug end during battery swapping.

In the prior art, two positioning pins and a grounding terminal are provided on the socket end of the quick-swapping connector, wherein an equipotential connection between a socket and a plug of the quick-swapping connector is realized by means of the grounding terminal, and the positioning pins only function to position and fix. This structural design occupies interface space, causing the connector to have a large size and heavy weight.

Accordingly, there is a need in the art for a new quick-swapping connector and a vehicle having same in order to solve the problems of the large size and heavy weight of an existing quick-swapping connector having an equipotential connection function.

### SUMMARY

The disclosure aims to solve the above technical problems at least to a certain extent, that is, to solve the problems of the large size and heavy weight of an existing quick-swapping connector having an equipotential connection function.

In a first aspect, the disclosure provides a quick-swapping connector, comprising: a socket, a grounding positioning pin being provided on the socket, and a first annular grounding structure being sleeved on the periphery of the grounding positioning pin; and a plug, a grounding positioning hole being provided in the plug, a second grounding structure being connected in the grounding positioning hole, the grounding positioning pin being insertable into the grounding positioning hole for positioning, and after the grounding positioning pin is inserted into the grounding positioning hole, the first grounding structure coming into contact with the second grounding structure.

In a preferred technical solution of the quick-swapping connector described above, the second grounding structure is a contact spring.

In a preferred technical solution of the quick-swapping connector described above, the contact spring is connected to the grounding positioning hole in an interference fit manner.

In a preferred technical solution of the quick-swapping connector described above, an annular protrusion is formed on an inner wall of the grounding positioning hole, an annular groove is formed on an outer wall of the contact spring, and the annular protrusion is adaptively mounted into the annular groove; and/or a first annular boss is formed on the inner wall of the grounding positioning hole, and a bottom end of the contact spring is carried on the first annular boss.

In a preferred technical solution of the quick-swapping connector described above, the quick-swapping connector further comprises an annular stopper, the annular stopper being detachably sleeved on the periphery of the grounding positioning pin, a second annular boss being formed on an outer wall of the grounding positioning pin, and the first grounding structure being engaged between the second annular boss and the annular stopper.

In a preferred technical solution of the quick-swapping connector described above, after the grounding positioning pin is inserted into the grounding positioning hole, an outer ring of the first grounding structure comes into contact with an inner ring of the second grounding structure.

In a preferred technical solution of the quick-swapping connector described above, the first grounding structure and the second grounding structure are made of the same material.

In a preferred technical solution of the quick-swapping connector described above, a positioning pin is also provided on the socket, a positioning hole is also provided in the plug, and the positioning pin is insertable into the positioning hole for positioning.

In a preferred technical solution of the quick-swapping connector described above, an annular bin wall is provided on the socket, the positioning pin and the grounding positioning pin are arranged inside of the annular bin wall, and after the positioning pin is inserted into the positioning hole and the grounding positioning pin is inserted into the grounding positioning hole, the socket, the annular bin wall and the plug enclose an electrical connection cavity.

In another aspect, the disclosure further provides a vehicle, comprising a quick-swapping connector of any one of the above-described implementations, the vehicle further comprising a battery and a vehicle body, wherein the socket is connected to the battery, and the plug is connected to the vehicle body.

It will be understood by those skilled in the art that the quick-swapping connector of the disclosure comprises the socket and the plug, wherein the grounding positioning pin is provided on the socket, the first annular grounding structure is sleeved on the periphery of the grounding positioning pin, the grounding positioning hole is provided in the plug, the second grounding structure is connected in the grounding positioning hole, the grounding positioning pin is insertable into the grounding positioning hole for positioning, and after the grounding positioning pin is inserted into the grounding positioning hole, the first grounding structure comes into contact with the second grounding structure.

When the socket of the quick-swapping connector is in fit connection with the plug, the grounding positioning pin is inserted into the grounding positioning hole, so that the contact spring and a contact ring come into contact with each other. The connection and positioning between the socket and the plug of the quick-swapping connector are realized by means of the fit between the grounding positioning pin and the grounding positioning hole. In addition, an equipotential connection between the socket and the plug is realized by means of the contact between the contact ring and the contact spring.

Compared with the prior art, according to the disclosure, the second grounding structure is built in the grounding positioning hole and the first grounding structure is sleeved on the periphery of the grounding positioning pin, so that such a grounding structure is built in the grounding positioning hole after the grounding positioning pin is inserted into the grounding positioning hole, thereby improving the overall interface layout of an existing quick-swapping connector, saving on interface space of the quick-swapping connector, further miniaturizing the quick-swapping connector, reducing the number of components and parts, reducing the weight of the quick-swapping connector, improving material utilization, and reducing costs. In addition, it is possible to ensure a stable contact relationship between the grounding structures, avoiding the occurrence of poor contact caused by a gap.

Also, since the structural strength of the grounding positioning pin is higher than the structural strength of a conventional grounding terminal, the technical solution of the disclosure in which the first grounding structure is integrated on the grounding positioning pin and the second grounding structure is internally connected to the grounding positioning hole can ensure that the grounding structure has a higher strength while ensuring reliable contact between the socket and the plug.

### BRIEF DESCRIPTION OF THE DRAWINGS

Preferred implementations of the disclosure are described below with reference to the accompanying drawings, in which:
FIG. 1 is a schematic diagram (I) showing a structure of a socket of a quick-swapping connector of the disclosure;
FIG. 2 is a schematic diagram showing a structure of the quick-swapping connector of the disclosure before the socket is in fit connection with a plug;
FIG. 3 is a schematic diagram showing a structure of the quick-swapping connector of the disclosure after the socket is in fit connection with the plug;
FIG. 4 is a schematic diagram (II) showing a structure of the socket of the quick-swapping connector of the disclosure;
FIG. 5 is a schematic diagram showing a connection relationship and structure of a grounding positioning hole and a contact spring of the quick-swapping connector of the disclosure; and
FIG. 6 is a schematic diagram showing a connection relationship and structure of a grounding positioning pin and a contact ring of the quick-swapping connector of the disclosure.

### List of reference signs:

1: socket; 11: grounding positioning pin; 111: second annular boss; 12: positioning pin; 13: contact ring; 14: annular bin wall; 15: positive terminal; 16: negative terminal; 2: plug; 21: grounding positioning hole; 211: annular protrusion; 212: first annular boss; 22: positioning hole; 23: contact spring; 231: annular groove; 3: annular stopper.

### DETAILED DESCRIPTION OF EMBODIMENTS

Preferred implementations of the disclosure will be described below with reference to the accompanying drawings. Those skilled in the art should understand that these implementations are merely used to explain the technical principles of the disclosure, and are not intended to limit the scope of protection of the disclosure. Those skilled in the art can make adjustments to the implementations according to requirements, so as to adapt to specific application scenarios.

It should be noted that in the description of the disclosure, the terms "first" and "second" are merely used for descriptive purposes and cannot be understood as indicating or implying relative importance.

In addition, it should also be noted that, in the description of the disclosure, the terms "mount", "connection" and "connected" should be interpreted in a broad sense unless explicitly defined and limited otherwise, which, for example, may mean a fixed connection, a detachable connection or an integral connection; may be a mechanical connection or an electrical connection; or may be a direct connection, an indirect connection by means of an intermediary, or internal communication between two elements. For those skilled in the art, the specific meanings of the foregoing terms in the disclosure can be interpreted according to a specific situation.

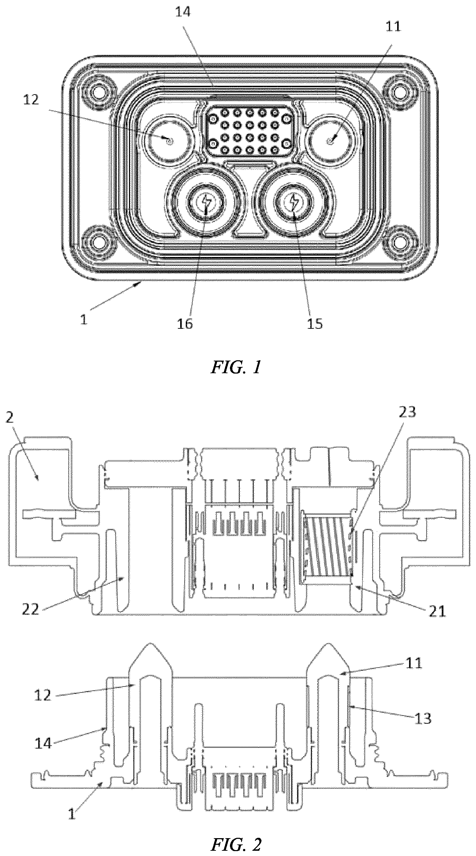

As shown in FIGS. 1 to 3, in order to solve the problems of the large size and heavy weight of an existing quick-swapping connector having an equipotential connection function, the disclosure provides a quick-swapping connector. The quick-swapping connector comprises a socket 1 and a plug 2, wherein a grounding positioning pin 11 is provided on the socket 1, a first annular grounding structure is sleeved on the periphery of the grounding positioning pin 11, a grounding positioning hole 21 is provided in the plug 2, a second grounding structure is connected in the grounding positioning hole 21, the grounding positioning pin 11 is insertable into the grounding positioning hole 21 for positioning, and after the grounding positioning pin 11 is inserted into the grounding positioning hole 21, the first grounding structure comes into contact with the second grounding structure. It will be understood that the grounding positioning pin 11 is in fit connection with the grounding positioning hole 21, and the grounding positioning pin 11 can not only be inserted into the grounding positioning hole 21, but can also be pulled out of the grounding positioning hole 21. The grounding positioning pin 11 is suitable for connection to a battery, and the grounding positioning hole 21 is suitable for connection to a vehicle body, thereby realizing grounding.

Preferably, the second grounding structure is a contact spring 23, for example, one of a crown spring, a torsion spring, a spring contact finger and a wire spring. It will be understood that the contact spring 23 is of an annular structure. In addition, it is only necessary for the first grounding structure to be annular and enable equipotential connection to the contact spring 23, for example, a contact ring 13. After the grounding positioning pin 11 is inserted into the grounding positioning hole 21, an outer ring of the contact ring 13 comes into contact with an inner ring of the contact spring 23, so that the contact reliability is improved.

In addition, a positioning pin 12 is also provided on the socket 1, a positioning hole 22 is also provided in the plug 2, and the positioning pin 12 is insertable into the positioning hole 22 for positioning, so that the positioning pin 12 can also be in fit connection with the positioning hole 22 on the basis of the grounding positioning pin 11 being in fit connection with the grounding positioning hole 21, thereby realizing two-point positioning and improving the reliability of connection between the socket 1 and the plug 2. It will be understood that the positioning pin 12 can not only be inserted into the positioning hole 22, but can also be pulled out of the positioning hole 22.

For ease of description, in the following, the second grounding structure of the disclosure will be described by taking the contact spring 23 as an example, and the first annular grounding structure will be described in the form of the contact ring 13.

When the socket 1 of the quick-swapping connector is in fit connection with the plug 2 thereof, the positioning pin 12 is inserted into the positioning hole 22 and the grounding positioning pin 11 is inserted into the grounding positioning hole 21, so that the contact spring 23 and the contact ring 13 come into contact with each other. The connection and positioning between the socket 1 and the plug 2 of the quick-swapping connector are realized by means of the fit between the positioning pin 12 and the positioning hole 22 and between the grounding positioning pin 11 and the grounding positioning hole 21. In addition, an equipotential connection between the socket 1 and the plug 2 is realized by means of the contact between the contact ring 13 and the contact spring 23.

Compared with the prior art, according to the disclosure, the contact spring 23 is built in the grounding positioning hole 21 and the contact ring 13 is sleeved on the periphery of the grounding positioning pin 11, so that such a grounding structure is built in the grounding positioning hole 21 after the grounding positioning pin 11 is inserted into the grounding positioning hole 21, thereby improving the overall interface layout of an existing quick-swapping connector, saving on interface space of the quick-swapping connector, further miniaturizing the quick-swapping connector, reducing the number of components and parts, reducing the weight of the quick-swapping connector, improving material utilization, and reducing costs. In addition, by providing the contact ring 13, it is possible to provide a stable contact relationship with the contact spring 23, avoiding the occurrence of poor contact caused by a gap when the grounding positioning pin 11 is in direct fit with the contact spring 23.

Also, since the structural strength of the grounding positioning pin 11 is higher than the structural strength of a conventional grounding terminal, the technical solution of the present disclosure in which the contact ring 13 is integrated on the grounding positioning pin 11 and the contact spring 23 is internally connected to the grounding positioning hole 21 can ensure that the grounding structure has a higher strength while ensuring reliable contact between the socket 1 and the plug 2.

In addition, compared with a conventional solution, since the grounding structure of the quick-swapping connector of the disclosure is not external, when the plug 2 is in fit connection with the socket 1, contact points can be reduced, thereby effectively preventing mechanical collision between the contact ring 13 and the contact spring 23 during battery swapping.

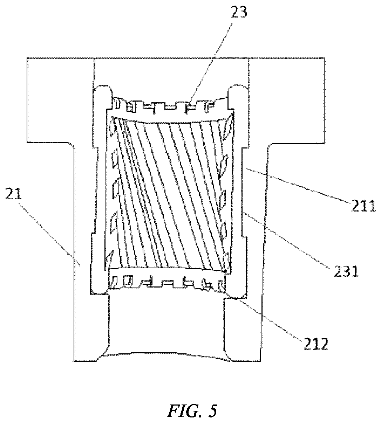

There are various specific implementations for assembling the contact spring 23 in the grounding positioning hole 21. As shown in FIG. 5, the disclosure will be described by taking the following possible implementations as examples.

First, the contact spring 23 is connected to the grounding positioning hole 21 in an interference fit manner. Second, an annular protrusion 211 is formed on an inner wall of the grounding positioning hole 21, an annular groove 231 is formed on an outer wall of the contact spring 23, and the annular protrusion 211 is adaptively mounted into the annular groove 231 to form limiting, thereby ensuring the stability of the contact spring 23 in the grounding positioning hole 21. Third, a first annular boss 212 is formed on the inner wall of the grounding positioning hole 21, for example, the first annular boss 212 is located at a lower portion of the inner wall of the grounding positioning hole 21, and a bottom end of the contact spring 23 is carried on the first annular boss 212, that is, the bottom end of the contact spring 23 is carried on a contact surface of the first annular boss 212 in an axial direction of the grounding positioning hole 21, so as to prevent the contact spring 23 from falling out of the grounding positioning hole 21. It will be understood that the lower portion of the inner wall of the grounding positioning hole 21 refers to a side of the grounding positioning hole 21 close to the ground after the plug 2 is in fit connection with the socket 1. Of course, the position of the first annular boss 212 may also be appropriately adjusted according to the specific form and size of the contact spring 23. For example, the first annular boss 212 is located in the middle of the inner wall of the grounding positioning hole 21, etc.

The above-described three implementations may be three independent implementations, or may be arbitrarily combined. For example, the quick-swapping connector of the disclosure has all the above-described three implementations.

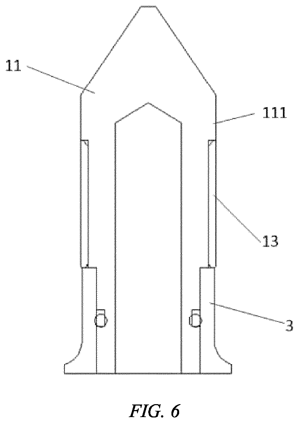

In addition, as a possible implementation, as shown in FIG. 6, the quick-swapping connector further comprises an annular stopper 3, the annular stopper 3 is detachably sleeved on the periphery of the grounding positioning pin 11, a second annular boss 111 is formed on an outer wall of the grounding positioning pin 11, for example, the second annular boss 111 is located at an upper portion of the outer wall of the grounding positioning pin 11, and the contact ring 13 is engaged between the second annular boss 111 and the annular stopper 3. It will be understood that the upper portion of the outer wall of the grounding positioning pin 11 refers to a side of the grounding positioning pin 11 away from the ground after the plug 2 is in fit connection with the socket 1.

There are various specific implementations for detachably sleeving the annular stopper 3 on the periphery of the grounding positioning pin 11. For example, an annular groove is formed on the grounding positioning pin 11, a sealing ring is provided in the annular groove, the annular stopper 3 is fastened to the grounding positioning pin 11 by means of the sealing ring, that is, the sealing ring is arranged between the annular stopper 3 and the grounding positioning pin 11. Alternatively, the annular stopper 3 is connected to the grounding positioning pin 11 by a means of a screw, etc.

When the second annular boss 111 is located at the upper portion of the outer wall of the grounding positioning pin 11, during assembly, the contact ring 13 is first mounted from a lower portion of the grounding positioning pin 11, the annular stopper 3 is then mounted, and the annular stopper 3 is fixed such that the contact ring 13 is engaged between the second annular boss 111 and the annular stopper 3, thereby forming fixation and limiting. Such an arrangement can facilitate the maintenance and replacement of the contact ring 13 while ensuring the stability of the contact ring 13. Of course, alternatively, the second annular boss 111 may also be located at the lower portion of the outer wall of the grounding positioning pin 11, and in this case, the annular stopper 3 is located at the upper portion of the outer wall of the grounding positioning pin 11. These simple changes fall within the scope of protection of the disclosure.

As a preferred implementation, the contact spring 23 and the contact ring 13 are made of the same material. This can prevent chemical corrosion caused by contact between metals of different materials. For example, the contact spring 23 and the contact ring 13 are made of one of copper, nickel and zinc.

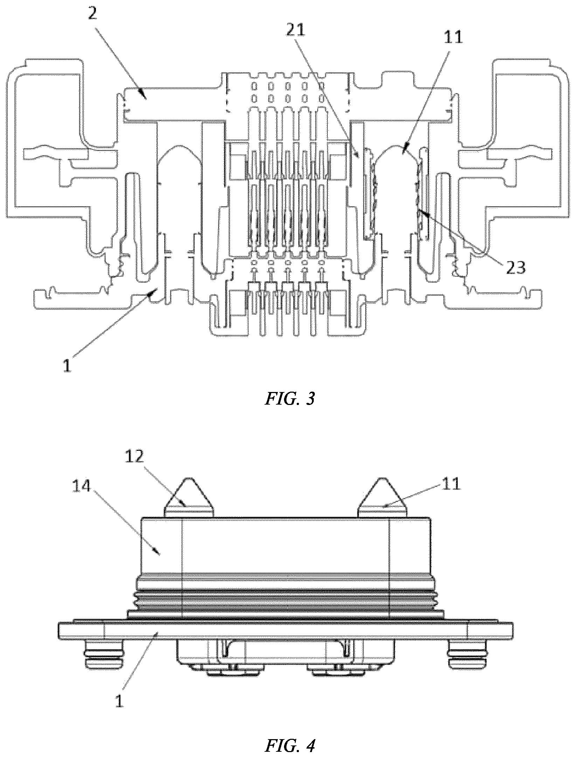

As a preferred implementation, as shown in FIG. 4 and with reference to FIG. 1, an annular bin wall 14 is provided on the socket 1, the positioning pin 12 and the grounding positioning pin 11 are arranged inside of the annular bin wall 14, and after the positioning pin 12 is inserted into the positioning hole 22 and the grounding positioning pin 11 is inserted into the grounding positioning hole 21, the socket 1, the annular bin wall 14 and the plug 2 enclose an electrical connection cavity (not shown), so that the grounding positioning pin 11 and the positioning pin 12 are located in the electrical connection cavity. In other words, the annular bin wall 14 protrudes from the socket 1, the annular bin wall 14 and the socket 1 jointly enclose an electrical connection bin, and the grounding positioning pin 11 and the positioning pin 12 are arranged inside of the annular bin wall 14, that is, the grounding positioning pin 11 and the positioning pin 12 are arranged in the electrical connection bin. After the positioning pin 12 is inserted into the positioning hole 22 and the grounding positioning pin 11 is inserted into the grounding positioning hole 21, the plug 2 is in fit connection with the socket 1, the electrical connection bin and the plug 2 jointly form the electrical connection cavity, and in this case, the grounding positioning pin 11 and the positioning pin 12 are located in the electrical connection cavity.

There are various ways for the electrical connection bin and the plug 2 to jointly form the electrical connection cavity. For example, a groove structure may be formed on the plug 2, the positioning hole 22, and the grounding positioning hole 21, etc. are arranged in the groove. After the positioning pin 12 is inserted into the positioning hole 22 and the grounding positioning pin 11 is inserted into the grounding positioning hole 21, the annular bin wall 14 is connected to an inner peripheral wall of the groove, so as to enclose the electrical connection cavity. Alternatively, after the positioning pin 12 is inserted into the positioning hole 22 and the grounding positioning pin 11 is inserted into the grounding positioning hole 21, the annular bin wall 14 exactly abuts against the plug 2, so as to enclose the electrical connection cavity, etc.

If the positioning pin and the grounding positioning pin are arranged outside of the annular bin wall, over the long-term use of the vehicle, a large amount of dust will accumulate between the annular bin wall and the positioning pin over time, the accumulated dust is difficult to clean and thus result in failure of battery swapping, and the entire interface structure is loose. Therefore, according to the disclosure, the positioning pin 12 and the grounding positioning pin 11 are arranged inside of the annular bin wall 14, so that the grounding positioning pin 11 and the positioning pin 12 are located in the electrical connection cavity after the positioning pin 12 is inserted into the positioning hole 22 and the grounding positioning pin 11 is inserted into the grounding positioning hole 21. Since the electrical connection cavity is a relatively closed environment, the problem of dust accumulation between the positioning pin 12 and the annular bin wall 14 can be effectively solved, thereby improving the success rate of battery swapping, and improving the overall interface layout of the existing quick-swapping connector, while saving on interface space of the quick-swapping connector, further miniaturizing the quick-swapping connector, and improving material utilization.

Preferably, with reference to FIG. 1, a positive terminal 15 and a negative terminal 16 on the socket 1 are arranged inside of the annular bin wall 14, so that the positive terminal 15 and the negative terminal 16 are located in the electrical connection cavity after the positioning pin 12 is inserted into the positioning hole 22 and the grounding positioning pin 11 is inserted into the grounding positioning hole 21, thereby preventing the positive terminal 15 and the negative terminal 16 from being dirty and failing.

It should be noted that the foregoing implementations are merely used to explain the principles of the disclosure, and are not intended to limit the scope of protection of the disclosure. Those skilled in the art can adjust the foregoing implementations without departing from the principle of the disclosure, so that the disclosure is applicable to more specific application scenarios.

For example, as an alternative implementation, although the second grounding structure of the disclosure is described in the form of the contact spring 23, this is not intended to limit the scope of protection of the disclosure. As long as the equipotential connection between the plug 2 and the socket 1 can be realized, the configuration thereof can be adjusted, for example, the second grounding structure may be an annular metal sheet, or an elastic piece, etc. These all do not deviate from the principle of the disclosure and fall within the scope of protection of the disclosure.

For example, as an alternative implementation, although the disclosure is described in such a manner that after the grounding positioning pin 11 is inserted into the grounding positioning hole 21, the outer ring of the first grounding structure comes into contact with the inner ring of the second grounding structure, this arrangement is not unique, for example, the first grounding structure abuts against the second grounding structure, etc. These all do not deviate from the principle of the disclosure and fall within the scope of protection of the disclosure.

For example, the positioning pin 12 and the positioning hole 22 may be omitted.

For example, as an alternative implementation, the specific arrangement of the contact ring 13 sleeved on the periphery of the grounding positioning pin 11 can be adjusted, for example, the contact ring 13 is directly welded to the grounding positioning pin 11, etc. These all do not deviate from the principle of the disclosure and fall within the scope of protection of the disclosure.

In another aspect, the disclosure further provides a vehicle, comprising a battery, a vehicle body and a quick-swapping connector of any one of the above-described implementations, wherein the socket is connected to the battery, and the plug is connected to the vehicle body.

After the vehicle has the quick-swapping connector, it is possible to ensure reliable contact between the socket 1 and the plug 2, reduce the number of components and parts, improve material utilization, reduce costs, and improve the success rate of battery swapping while realizing the equipotential connection between the quick-swapping plug 2 and the quick-swapping socket 1 of the vehicle.

Heretofore, the technical solutions of the disclosure have been described with reference to the preferred implementations shown in the accompanying drawings. However, those skilled in the art can readily understand that the scope of protection of the disclosure is apparently not limited to these specific implementations. Without departing from the principles of the disclosure, those skilled in the art may make equivalent changes or replacements to related technical features. The technical solutions obtained after these changes or replacements fall within the scope of protection of the disclosure.

## Claims

1. A quick-swapping connector, comprising:
a socket, a grounding positioning pin being provided on the socket, and a first annular grounding structure being sleeved on the periphery of the grounding positioning pin; and
a plug, a grounding positioning hole being provided in the plug, a second grounding structure being connected in the grounding positioning hole, the grounding positioning pin being insertable into the grounding positioning hole for positioning, and after the grounding positioning pin is inserted into the grounding positioning hole, the first grounding structure coming into contact with the second grounding structure.

2. The quick-swapping connector according to claim 1, wherein the second grounding structure is a contact spring.

3. The quick-swapping connector according to claim 2, wherein
the contact spring is connected to the grounding positioning hole in an interference fit manner.

4. The quick-swapping connector according to claim 2, wherein
an annular protrusion is formed on an inner wall of the grounding positioning hole, an annular groove is formed on an outer wall of the contact spring, and the annular protrusion is adaptively mounted into the annular groove; and/or
a first annular boss is formed on the inner wall of the grounding positioning hole, and a bottom end of the contact spring is carried on the first annular boss.

5. The quick-swapping connector according to claim 1, further comprising:
an annular stopper, the annular stopper being detachably sleeved on the periphery of the grounding positioning pin, a second annular boss being formed on an outer wall of the grounding positioning pin, and the first grounding structure being engaged between the second annular boss and the annular stopper.

6. The quick-swapping connector according to claim 2, wherein
after the grounding positioning pin is inserted into the grounding positioning hole, an outer ring of the first grounding structure comes into contact with an inner ring of the second grounding structure.

7. The quick-swapping connector according to claim 1, wherein
the first grounding structure and the second grounding structure are made of the same material.

8. The quick-swapping connector according to claim 1, wherein
a positioning pin is also provided on the socket, a positioning hole is also provided in the plug, and the positioning pin is insertable into the positioning hole for positioning.

9. The quick-swapping connector according to claim 7, wherein
an annular bin wall is provided on the socket, the positioning pin and the grounding positioning pin are arranged inside of the annular bin wall, and after the positioning pin is inserted into the positioning hole and the grounding positioning pin is inserted into the grounding positioning hole, the socket, the annular bin wall and the plug enclose an electrical connection cavity.

10. A vehicle, comprising a quick-swapping connector of any one of claims 1 to 9, the vehicle further comprising a battery and a vehicle body, wherein the socket is connected to the battery, and the plug is connected to the vehicle body.
